# NOUVEAU FASCICULE DE BREVET EUROPEEN

(11) **EP 1 510 160 B2**
(45) Date de publication et mention de la décision concernant l'opposition: **29.10.2014**
(45) Mention de la délivrance du brevet: 19.10.2011
(21) Numéro de dépôt: 03019164.7
(22) Date de dépôt: 25.08.2003
(51) Int. Cl.: A47J 31/40, A47J 31/06

(54) **Méthode et dispositif pour préparer une boisson à partir de capsules contenant une substance**
Verfahren und Vorrichtung zum Herstellen eines Getränkes aus einer eine Substanz enthaltenden Kapsel
Method and apparatus for making a beverage from a cartridge containing a substance

(43) Date de publication de la demande: 02.03.2005
(73) Titulaire: Nestec S.A., 1800 Vevey (CH)
(72) Inventeur: Denisart, Jean-Paul, 1093 La Conversion (CH); Caprotti, Patrick, 1072 Forel/Lavaux (CH); Denisart, Jean-Luc, 1096 Cully (CH); Yoakim, Alfred, 1808 St-Legier-La Chiesaz (CH); Kollep, Alexandre, 1096 Lutry (CH)
(74) Mandataire: Rupp, Christian

(56) Documents cités:
- EP-A1- 1 440 910
- EP-A2- 1 089 240
- WO-A-86/02537
- WO-A1-02//28241
- WO-A1-02//058523
- WO-A2-02/074144
- WO-A2-2004//006740
- DE-C- 3 722 554
- US-A- 2 939 381

## Description

La présente invention se rapporte aux méthodes et dispositifs de préparation de boissons à partir de capsules contenant une substance alimentaire telle qu'une substance à extraire et/ou à dissoudre. L'invention se rapporte plus précisément à une méthode et un dispositif permettant de préparer de manière optimisée une variété de boissons à partir de substances de nature différente.

L'utilisation de capsules contenant une substance pour la préparation d'une boisson par extraction ou par mélange sous pression est bien connue notamment dans le domaine des cafés type espresso ou cafés solubles et s'avère intéressante en particulier pour des raisons d'hygiène, de fraîcheur de conservation du café et de facilité d'usage.

Il existe différents principes de machines permettant de préparer des boissons à partir de "capsules" contenant une substance à extraire telle que du café moulu ou du thé ou une substance à dissoudre ou disperser comme du café soluble, du chocolat, du lait ou un mélange ou une simple association de ces substances.

Les capsules peuvent être des capsules fermées servant d'enceinte pour l'injection d'eau et s'ouvrant pour libérer le liquide au delà d'un certain seuil de pression par rupture d'une face de la capsule au contact d'éléments en relief. L'eau est traditionnellement injectée par perforation au travers de la capsule au moyen d'une aiguille ou de pointes. Un exemple de système d'extraction de ce type est décrit dans le brevet EP 0512 470 B1 ou encore EP 0870 457. Dans la demande de brevet européenne non-encore publiée No. 02000943.7, il est décrit une capsule possédant ses propres moyens en relief pour rompre un film ou membrane de capsule et ainsi libérer l'extrait liquide lorsqu'un seuil de pression à été atteint à l'intérieur de la capsule.

Les capsules peuvent encore être des enceintes perméables de type filtre ou encore des enceintes semi-perméables comprenant une partie de filtre.

Il est connu d'utiliser des substances à mélanger (solubles ou dispersables) et à extraire sous pression en utilisant la même machine de façon à offrir une plus grande variété de boissons. Par exemple, on peut préparer sur une même machine un café "espresso" lorsque la capsule contient un café moulu ou un chocolat chaud lorsque la substance contient un mélange de cacao et de lait en poudre. Cependant, on constate qu'il ne suffit pas de charger une capsule avec une substance de nature différente pour obtenir une boisson de qualité en terme d'arômes, de goût et/ou de volume de mousse par exemple.

En particulier, les conditions d'injection, de mélange ou de mouillage peuvent influencer considérablement la qualité de la boisson produite. Selon que l'on considère une substance, issue d'un mouturage, compactée dans une capsule ou bien que l'on considère une substance à dissoudre ou disperser dans un liquide tel qu'un café soluble ou une substance à base de lait telle qu'un cappuccino, chocolat ou autre, la façon dont l'eau circule au travers de la capsule a une influence sur les conditions d'extraction ou de mélange et donc sur la qualité finale de la boisson. Ainsi, un produit comme le café ou le chocolat doit se dissoudre ou se disperser rapidement et entièrement en produisant, de préférence une mousse, alors qu'un thé soluble doit, de préférence, se dissoudre sans produire de mousse. La dissolution ou dispersion doit être totale, homogène, rapide et sans formation de grumeaux ou de floculation. Pour les produits à extraire tels que le café moulu les conditions optimales de mouillage sont différentes. Le produit doit être entièrement mouillé en optimisant la surface de contact eau/café, et sans créer de chemins privilégiés pour l'eau au travers du lit de café. La conséquence de la création d'un chemin privilégié au travers du lit de café peut résulter dans une trop brusque montée en pression et ainsi une libération trop rapide de l'extrait alors que le temps d'extraction est insuffisant et une partie du café n'a pas encore été correctement mouillée.

Les conditions d'injection peuvent être améliorées mais de manière spécifique en réponse à un problème particulier ou en relation avec une substance particulière. Par exemple, la demande de brevet EP 1299022 A1 concerne une cage à capsule comprenant des lames et une entrée d'eau séparée de façon à répartir l'eau au travers de la capsule et éliminer les problèmes d'obstruction et d'entartrage des aiguilles d'injection d'eau. Par exemple, la demande EP 1 203554 A1 vise la forme des pointes de perçage pour favoriser les conditions d'écoulement d'eau à l'intérieur de la capsule et éviter les remontées de résidus solides en dehors de la capsule.

Dans la demande DE3722554, le dispositif comprend un injecteur d'eau qui est adapté à percer soit une capsule de faible hauteur soit une capsule de plus grande hauteur. Toutefois, dans les deux cas, le mode de mouillage n'est pas différent dans la capsule.

Dans la demande WO86/0237, le dispositif consiste à pouvoir faire varier la quantité de vapeur et d'eau injectée dans la capsule ou encore le temps d'injection.

Un autre dispositif est décrit dans la demande WO 02/074144 A2.

La présente invention vise à résoudre ce problème et à proposer un dispositif permettant de satisfaire la préparation adaptée d'une plus large gamme de boissons à partir d'une large variété de substances.

Pour cela, l'invention concerne un dispositif selon les revendications 1 et 5.

Le terme "capsule" s'entend au sens large comme tout type d'élément de recharge renfermant une substance sans limitation de forme ou de matériaux constitutifs de l'élément. En particulier, la capsule peut être du type imperméable, perméable ou partiellement perméable.

Le système d'injection est actionnable pour modifier la configuration d'injection selon au moins deux modes possibles, les deux modes présentant entre eux une ou plusieurs distinctions quant à leur direction d'injection, le nombre de points d'injection, la position radiale et/ou en profondeur de l'injection dans la capsule.

Le dispositif est ainsi capable de produire les conditions d'injection qui correspondent aux conditions recherchées en fonction du type de capsule et/ou de la nature de la substance renfermée dans ladite capsule. Il est ainsi possible d'utiliser le même dispositif pour produire des boissons différentes répondant aux spécificités de chaque substance contenue dans la capsule ainsi qu'aux critères de qualité inhérents à chaque boisson.

Le système d'injection selon la revendication 1 comprend au moins un élément de perforation et d'injection qui est déplaçable dans la capsule selon au moins deux positions distinctes; positions définissables par référence à la surface perforée de la capsule. Le déplacement spécifique de l'élément de perforation est ainsi fonction du mode de mouillage désiré.

L'élément de perforation et d'injection peut ainsi être déplacé par un moyen d'actionnement à commande manuelle ou automatique du type mécanique, hydraulique, électrique ou encore mixtes.

Dans certains modes de réalisation, l'élément de perforation est déplaçable selon deux profondeurs différentes dans la capsule.

Dans un premier mode de réalisation, l'élément de perforation et d'injection est rendu déplaçable selon une première position haute dans la capsule pour mouiller la substance contenue dans la capsule par le haut; et une seconde position plus profonde ou basse dans la capsule pour mouiller la substance contenue dans la capsule à partir de la base de la substance. Le mode de mouillage par le haut convient bien aux substances à extraire car il respecte l'exigence du passage de toute la solution au travers du lit en formant un piston d'eau au travers du lit; ce qui conditionne l'extraction puis le moment propice à l'ouverture de la capsule.

Le mode de mouillage par la base, quant à lui, favorise la dissolution des substances à dissoudre comme le café instantané ou les boissons à base de lait, et élimine ainsi les zones d'accumulation en solides qui ont tendances à se créer dans le fond de la capsule comme le long des arêtes internes ou des bords.

Dans un second mode de réalisation, l'élément de perforation est déplaçable dans une première position haute dans la capsule dans laquelle au moins un point d'injection est découvert dans la capsule et une seconde position plus basse dans la capsule dans laquelle un nombre plus important de points d'injection sont découverts dans la capsule. Le nombre de points d'injection augmentant dans le second mode, l'injection devient plus diffuse ou plus dispersée et la vitesse du fluide d'injection diminue au travers de la capsule; ce qui convient mieux aux substances à extraire par rapport aux substances à mélanger.

Selon la revendication 5, le système d'injection comprend au moins un premier élément de perforation et d'injection et au moins un second élément de perforation et d'injection distinct du premier élément de perforation et d'injection; lesquels sont déplaçables relativement l'un par rapport à l'autre; chacun d'eux procurant un mode de mouillage différent de la substance dans la capsule. Ainsi, chaque élément de perforation et de mouillage est spécialisé dans un mode de mouillage qui est adapté à une ou plusieurs substances et/ou pour former à partir d'une même substance des boissons aux caractéristiques différentes.

Selon la revendication 5, le premier et deuxième éléments sont déplaçables en opposition de phase (ou de mouvement) l'un par rapport à l'autre selon au moins une première position où le premier élément est en engagement dans la capsule et le deuxième élément est en retrait de la capsule et inversement une deuxième position où le premier élément est en retrait de la capsule et le deuxième élément est en engagement dans la capsule. Un tel arrangement permet de rapidement commuter d'un mode de mouillage à l'autre. Les avantages sont, en particulier, la rapidité et la simplicité dans la sélection du mode de mouillage approprié.

La commande du mouvement opposé des éléments peut être réalisée par un moyen de commande à bascule ou à genouillère, par exemple, ou tout moyen mécaniquement ou électriquement équivalent, comme un moyen du type à solénoïde, par exemple. L'avantage est de permettre ainsi la sélection rapide et fiable du mode de mouillage le plus adapté en fonction de la substance et/ou de la capsule présente dans le dispositif.

Un élément d'injection selon l'invention peut préférablement comprendre au moins un point d'injection à l'intérieur de la capsule sous forme d'un jet configuré de manière à créer dans la capsule un mouvement tourbillonnant qui provoque un brassage du liquide avec la substance.

De manière préférentielle, l'élément peut être excentré par rapport à l'axe de la capsule sous forme d'une pointe, par exemple, possédant un orifice d'injection dont la direction d'injection est inclinée par rapport à l'axe diamétral de la capsule. L'axe de l'orifice d'injection à partir du point d'injection forme un angle compris entre 20° et 60° et de préférence entre 35° et 45° avec une ligne reliant le point d'injection au centre de la capsule.

Un tel mode de mouillage a pour effet de créer au moins un moment de force hydraulique qui entraîne la substance en mouvement rotationnel façon à former un effet de vortex à l'intérieur de la capsule et autour de son axe central. De préférence, la direction d'injection se fait en direction du fond de la capsule pour générer un mouvement de turbulences internes, non seulement à effet vortex, mais en plus dans une direction sensiblement perpendiculaire à la direction du vortex, comme de bas en haut.

Une seule pointe d'injection peut être suffisante pour les substances à dissoudre ou disperser comme à base de chocolat et/ou de lait.

Plusieurs pointes d'injection peuvent être disposées de manière excentrée de façon à mieux distribuer le liquide dans la capsule. Une telle configuration peut être avantageuse pour certaines substances, en particulier, pour créer un brassage de liquide suffisamment réparti dans un lit d'une substance à extraire telle qu'une mouture de café ou autre.

Dans un mode préférentiel, l'un des deux éléments d'injection est une plaque multi-pointe destinée, lors de son engagement au travers de la capsule, à perforer la surface de la capsule en de multiples endroits. Un tel agencement est avantageux pour les substances mouturées comme le café où il est avantageux de multiplier les zones d'entrée d'eau, distribuer l'eau sur une large partie de la section de la capsule, voire toute sa section, à l'intérieur de la capsule, de façon à ainsi ralentir la vitesse de passage de l'eau dans le lit de substance, éviter ainsi les chemins préférentiels au travers de la substance et ainsi garantir le mouillage complet et progressif de toute la substance.

Dans un autre mode préférentiel, l'un des deux éléments est une pointe d'injection localisée sensiblement au centre de la capsule et qui est configurée de manière à produire un arrosage divergent multidirectionnel sous forme d'au moins une fine couche d'eau.

Il peut s'agir d'une seule couche qui s'étend de manière continue sur le pourtour de la pointe et arrose la substance contenue dans la capsule de manière circulaire ou de plusieurs couches d'eau discontinues qui s'étendent de manière sensiblement répartie sur le pourtour de la pointe. La ou les fines couches d'eau possèdent une épaisseur inférieure ou égale à 0,5 mm, de préférence inférieure à 0,3 mm. Dans un mode préférentiel, non limitatif, la pointe est configurée de façon à s'ouvrir sous l'effet de la pression d'eau à l'encontre d'un élément élastique de façon à libérer un passage d'épaisseur déterminée en fonction de la pression et créer ainsi la couche d'eau. Une telle configuration a pour avantage d'être auto-nettoyante et d'assurer une couche d'eau régulière, sans problème d'obstruction ou autres. Dans un autre mode, la pointe comprend des ouvertures fixes, sous forme de fentes, de façon à produire plusieurs couches d'eau, lesquelles en combinaison les une avec les autres, distribuent l'eau en assurant une couverture sur environ 360 degrés.

Dans un autre mode, la pointe d'injection produisant un arrosage divergent en forme de couche(s) fine(s) d'eau peut être l'unique moyen d'injection du dispositif et être déplaçable en profondeur à l'intérieur de la capsule selon au moins deux profondeurs différentes de mouillage. Un déplacement selon plusieurs profondeurs permet de traiter à la fois des substances moulues disposée en lit à extraire qui doivent, de préférence, être mouillée avec un passage complet et lent de l'eau au travers du lit, et les substances à dissoudre, pour lesquelles il peut est avantageux d'injecter l'eau à une profondeur plus importante, de façon à progressivement désagréger la masse à dissoudre et l'évacuer, sans former de grumeaux.

De manière préférentielle, un moyen d'actionnement est prévu pour déplacer le ou les éléments de perforation et d'injection selon les deux positions, de manière sélective, par reconnaissance de la taille et/ou la géométrie propre de la capsule. Le moyen d'actionnement peut prendre des formes très variées sans toutefois que l'on sorte du principe général de l'invention. Le moyen d'actionnement peut, par exemple, comprendre au moins un support solidaire dudit élément de perforation et d'injection; lequel support est déplaçable élastiquement par rapport à une base de tête, le moyen d'actionnement comprenant au moins un moyen de détection destiné à entraîner le moyen d'actionnement en mouvement par engagement de manière complémentaire d'un bord de la capsule. Le moyen d'actionnement peut être mobile par rapport à un élément de référence du dispositif, tel qu'une base de tête, qui est placée du côté de la surface d'injection de la capsule et qui coopère en fermeture avec un support de capsule destiné à recevoir et maintenir la capsule en place.

Dans un mode particulier de l'invention, le système d'injection comprend un premier élément d'injection et de perforation sous forme d'une pointe d'injection excentrée laquelle est solidaire du moyen d'actionnement et un second élément d'injection et de perforation sous forme d'une plaque multi-pointe laquelle est reliée par un moyen de commande à bascule au moyen d'actionnement et est montée en déplacement relatif par rapport à la base de tête; ladite plaque multi-pointe étant ainsi commandée dans une position de perforation de la surface de la capsule lorsque le moyen de détection du moyen d'actionnement rencontre et engage un bord complémentaire de la capsule et est commandée en position de rétraction par rapport à la surface de la capsule et permettant, par conséquent, l'entrée de la pointe d'injection dans la capsule lorsque le moyen de détection ne rencontre pas le bord complémentaire de la capsule.

Dans un autre mode de réalisation particulier, le système d'injection comprend un premier élément de perforation et d'injection sous forme d'une pointe d'injection excentrée laquelle est solidaire du moyen d'actionnement et un second élément d'injection et de perforation sous forme d'une pointe d'injection centrale montée en guidage au travers du moyen d'actionnement et de la base de tète; ladite pointe d'injection excentrée étant dans une position en retrait de la surface de la capsule lorsque le moyen de détection du moyen d'actionnement rencontre et engage un bord complémentaire de la capsule et est en position de perforation dans la capsule lorsque le moyen de détection ne rencontre pas le bord complémentaire de la capsule.

Selon une autre caractéristique, le système d'injection du dispositif de l'invention comprend des moyens pour maintenir l'eau à une certaine température d'injection en fonction de la nature de la substance et/ou du type d'injection. De tels moyens peuvent comprendre un chauffe-eau tel qu'un thermobloc, une cartouche résistive chauffante ou encore une bouilloire et des moyens de contrôle de la température de l'eau dans le système d'injection tels que qu'un thermostat, par exemple. Les moyens pour maintenir la température de l'eau sont commutables pour chauffer l'eau selon une première gamme de températures et selon une deuxième gamme de températures, différente de la première gamme de températures, et inversement, ceci en fonction de la nature de la substance et/ou du type de capsule. Ainsi, lorsque la capsule contient un produit apte à la floculation, tel que le lait, le système d'injection est commutable pour établir la température de l'eau à l'injection dans une gamme de température qui n'affecte pas la floculation de la substance. Par exemple, pour le lait en poudre, la température est ainsi abaissée dans une gamme de température inférieure à 80°C, de préférence entre 50 et 75 °C. La commutation peut être effectuée par les moyens d'actionnement en liaison avec la capsule tels que précédemment décrits.

De manière similaire, le système d'injection d'eau possède des moyen de régler le débit d'eau en fonction de la nature de la substance et/ou du type de capsule. De manière préférée, les moyens comprennent une pompe dont la force est réglable et dont le réglage peut se faire par les moyens d'actionnement en liaison avec la capsule tels que précédemment décrits.

L'invention se rapporte aussi à un procédé selon les revendications 20 et 23 pour préparer une boisson par injection d'eau au travers d'une capsule contenant une substance à dissoudre et/ou à extraire dans lequel le liquide est injecté au travers de la capsule selon au moins deux modes d'injection différents chacun pouvant être sélectionné en fonction du type de capsule et/ou de la nature de la substance contenue dans ladite capsule.

Le liquide est injecté selon au moins deux modes dans lesquels les points d'injection sont en nombres distincts.

Le liquide est injecté selon deux modes d'injection qui définissent deux profondeurs du flux d'injection distinctes dans la capsule.

Selon la revendication 23, le liquide est injecté selon au moins deux modes d'injection dans lesquels la vitesse d'introduction du liquide dans la capsule est différente. Plus particulièrement, la vitesse d'introduction du liquide dans la capsule peut-être ralentie en multipliant les points d'injection du liquide dans la capsule à partir d'une même source de liquide sous pression. Pour les substances à extraire, il est avantageux d'avoir une vitesse d'introduction plus lente que pour les substances solubles ou dispersables à mélanger. Ainsi, pour une substance à extraire, une multitude de points d'injection est préférable permettant l'introduction de liquide à vitesse relativement plus faible pour éviter la formation de chemins privilégiés au travers du lit de substance.

Le liquide est injecté selon un premier mode de telle manière à créer dans ladite capsule un mouvement tourbillonnant provoquant un brassage du liquide injecté avec ladite substance.

De même, le liquide est injecté selon un second mode de telle manière à former un arrosage selon plusieurs points d'entrée dans la capsule et à une vitesse d'injection plus lente que selon ledit premier mode.

D'autres caractéristiques et avantages de l'invention apparaîtront à la lecture de la description d'exemples, donnés à titre illustratif et non limitatif, en référence aux dessins annexés dans lesquels:
- Les figures 1 à 5 représentent un premier mode de réalisation d'un dispositif de l'invention;
- La figure 1 est une vue en coupe du dispositif selon le premier mode, en ouverture;
- La figure 2 est une vue en coupe du dispositif selon le premier mode en fermeture autour de la capsule dans une première configuration de mouillage;
- La figure 3 est une vue en coupe du dispositif selon le premier mode de réalisation en fermeture autour de la capsule dans une seconde configuration de mouillage;
- La figure 4A est une vue en perspective du système d'injection du premier mode;
- La figure 4B est une vue en coupe selon A-A de la figure 4A;
- La figure 5 est une vue de détail du système d'injection lors de son ouverture en fonctionnement par la pression d'eau;
- Les figures 6 à 12 représentent un second mode de réalisation du dispositif de l'invention;

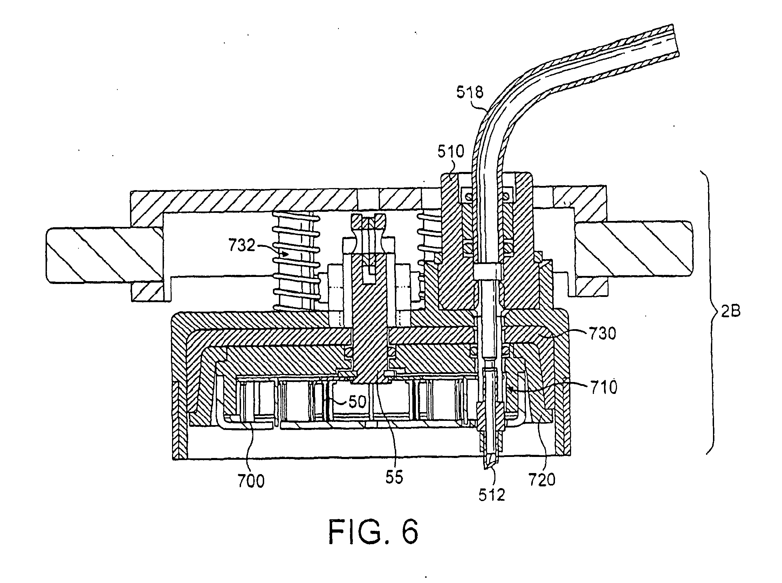

- La figure 6 est une vue en coupe de la partie haute du dispositif selon le second mode, en ouverture;

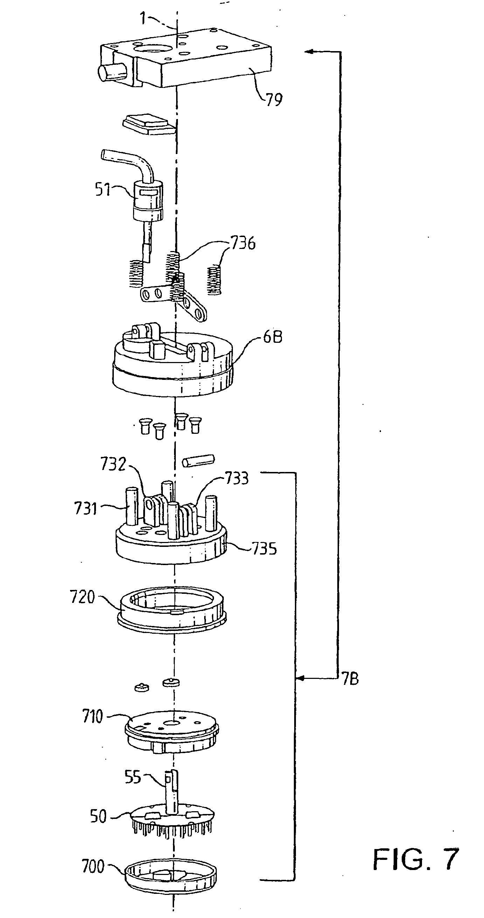

- La figure 7 est une vue en éclatée de la partie haute du dispositif de la figure 6;

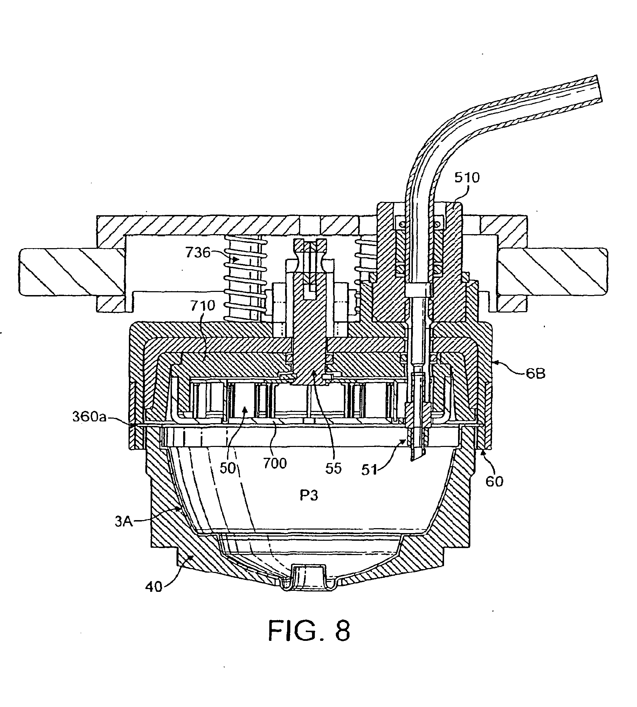

- La figure 8 est une vue en coupe du dispositif selon le second mode en fermeture autour de la capsule dans une première configuration de mouillage;

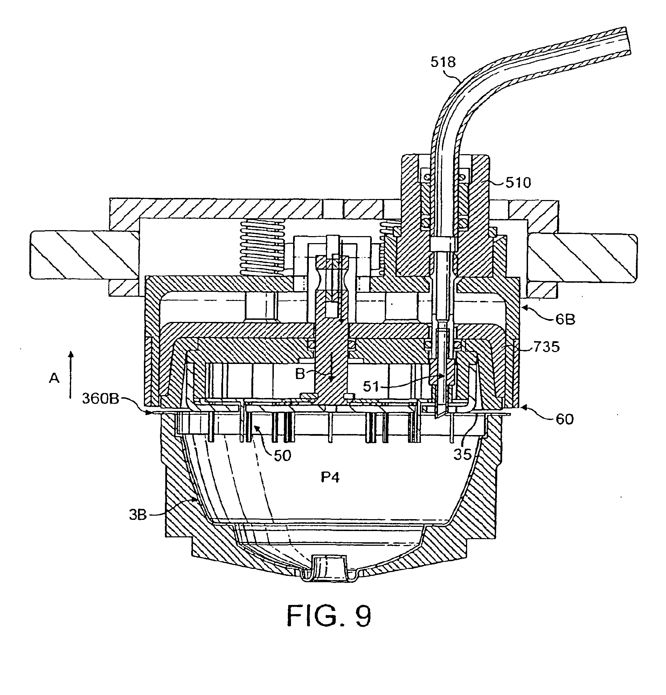

- La figure 9 est une vue en coupe du dispositif selon le second mode en fermeture autour de la capsule, dans une seconde configuration de mouillage;

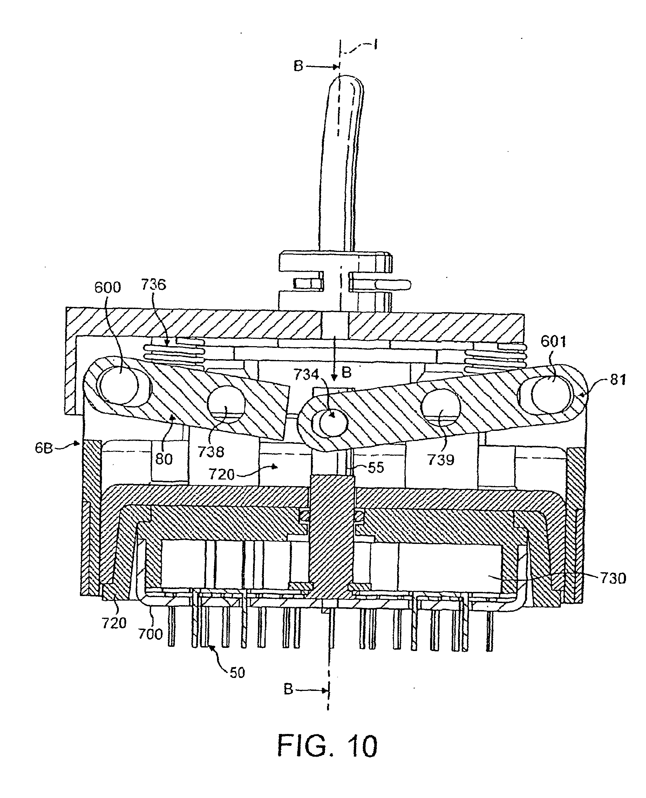

- La figure 10 est une autre vue en coupe selon B-B de la figure 9, de la partie haute du dispositif seulement;

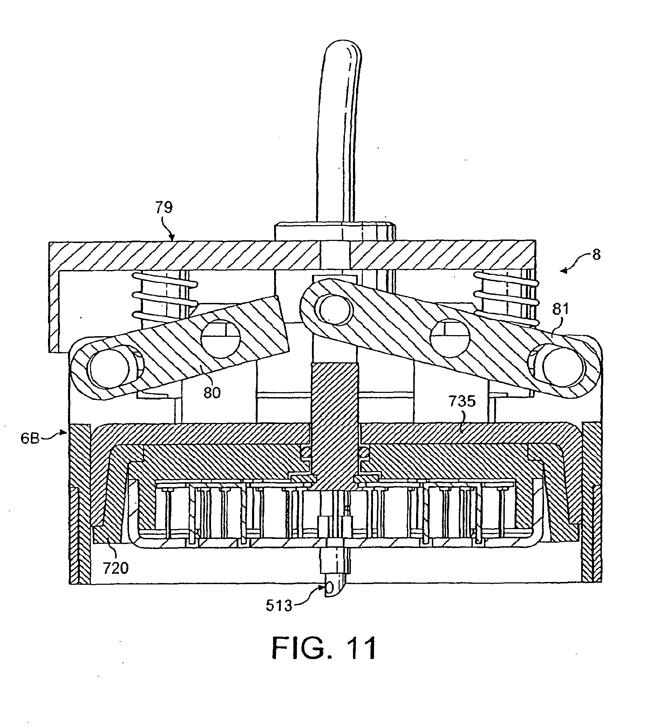

- La figure 11 est une autre vue en coupe, à angle droit par rapport à celle de la figure 8, de la partie haute du dispositif seulement;

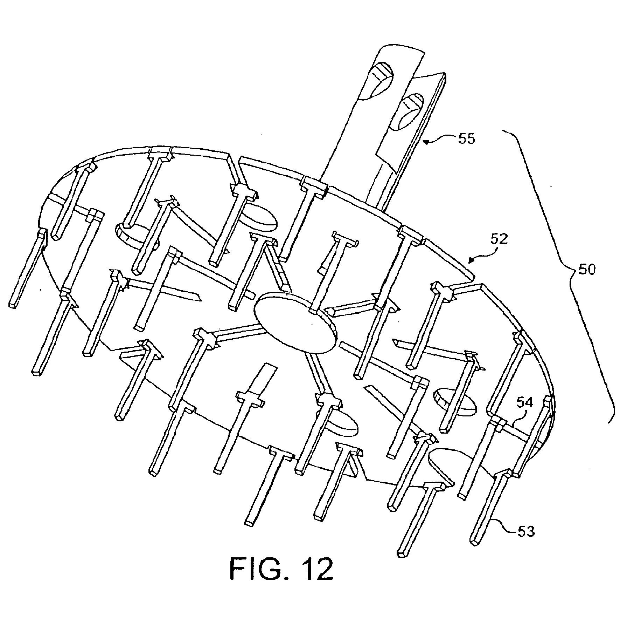

- La figure 12 est une vue de détail d'un des deux éléments de perforation et d'injection du mode des figures 6-11;

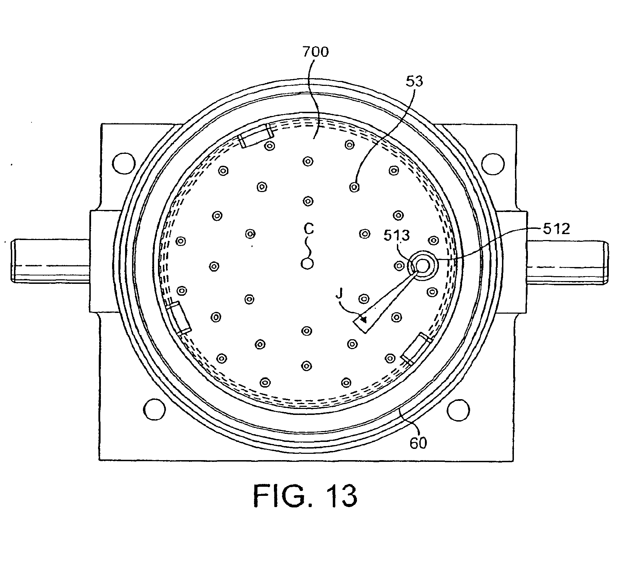

- La figure 13 est une vue simplifiée de dessous montrant la configuration d'injection de l'autre élément de perforation et d'injection du mode des figures 6-12;

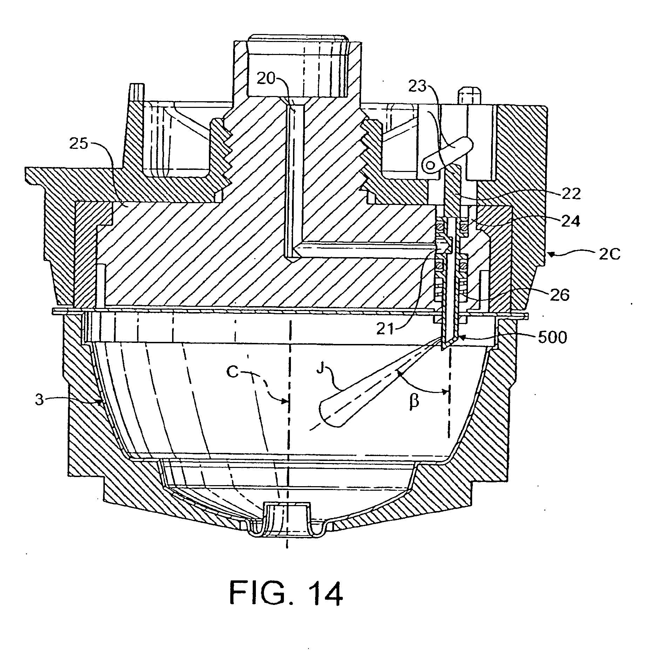

- La figure 14 est une vue schématique en coupe d'un autre mode de réalisation d'un dispositif pour la préparation d'une boisson par injection d'un liquide au travers d'une capsule selon l'invention, le dispositif de préparation étant représenté en position de fermeture et selon un premier mode d'utilisation ;

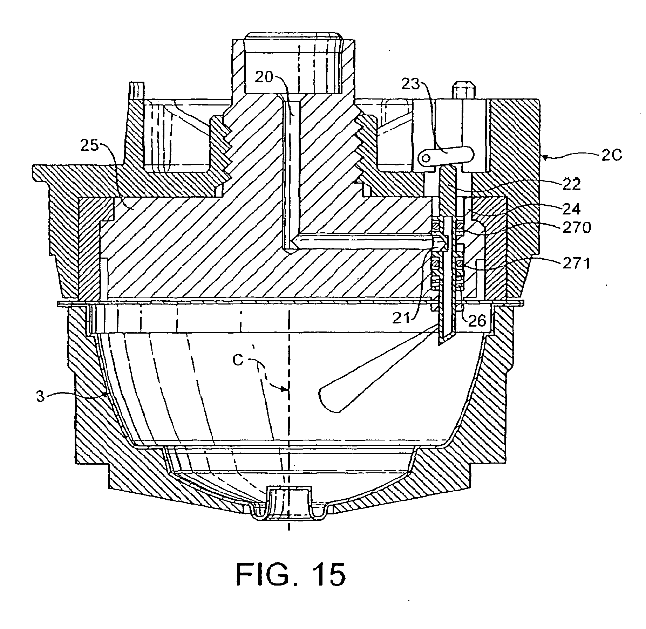

- La figure 15 est une vue schématique du dispositif de préparation représenté à la figure 14, le dispositif de préparation étant représenté en position de fermeture et selon un deuxième mode d'utilisation ;

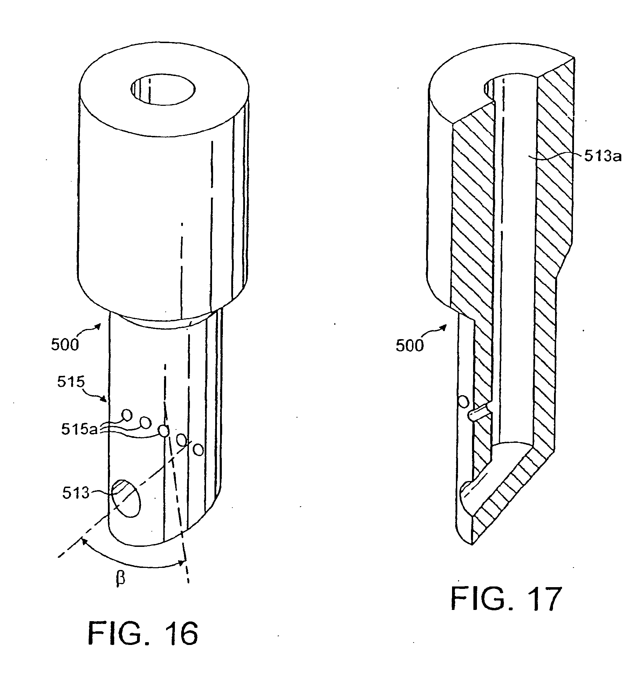

- Les figures 16 et 17 sont des vues schématiques respectivement en perspective et en perspective coupée de l'élément de perforation et d'injection utilisable en liaison avec le mode de réalisation du dispositif de préparation des figures 14-15;

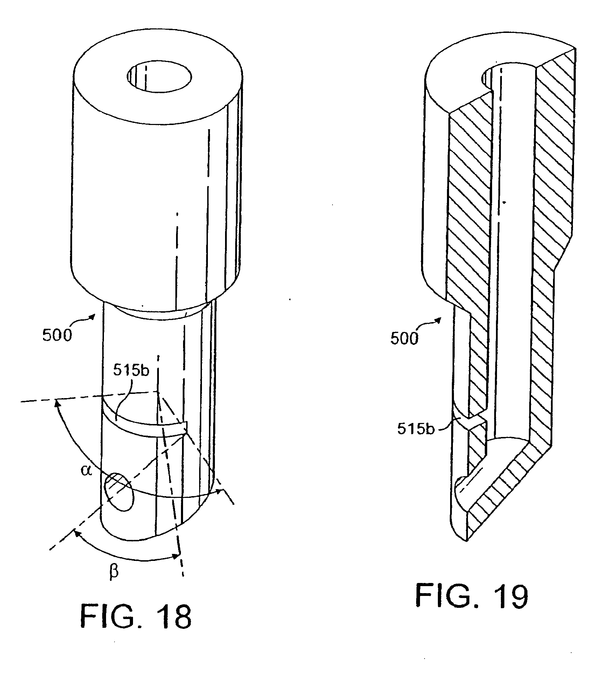

- Les figures 18 et 19 sont des vues schématiques respectivement en perspective et en perspective coupée d'une variante de réalisation de l'élément de perforation et d'injection utilisable en liaison avec le mode de réalisation du dispositif de préparation des figures 14-15.

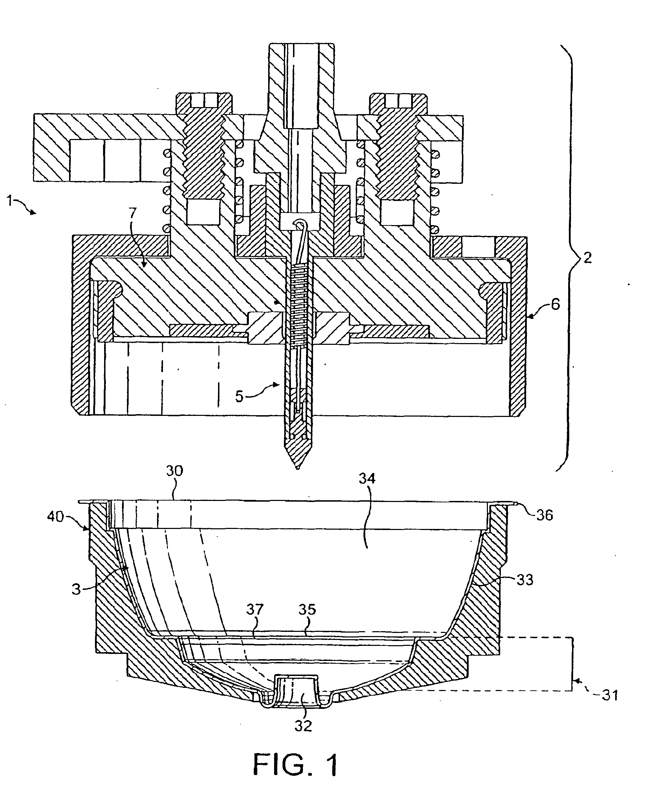

En référence aux figures 1 à 3, un premier mode de réalisation préférentiel d'un dispositif de préparation 1 est illustré en coupe, qui comprend un système d'injection 2 d'un fluide sous pression, de préférence, de l'eau froide ou chaude sous pression, qui est commutable selon au moins deux positions de profondeur d'injection différentes à l'intérieur d'une capsule 3. Le dispositif comprend un premier sous-ensemble inférieur sous forme d'un support de capsule ou "porte-capsule" 40 lequel a une forme et une taille adaptée à recevoir en partie au moins la capsule 3. La capsule peut être une capsule fermée, ouverte ou partiellement ouverte.

Selon un mode préféré, la capsule comprend une chambre fermée contenant la substance à extraire et/ou à dissoudre et une portion de retenue telle qu'une membrane 35 laquelle s'ouvre, sous l'effet de la montée en pression à l'intérieur de la chambre, au contact de moyens d'engagement tels que des éléments en reliefs 37. Les moyens d'engagement peuvent soit faire partie de la capsule elle-même soit faire partie du porte-capsule 40. La capsule peut aussi préférentiellement comprendre des moyens de collecte 31 du liquide extrait ou du mélange et un moyen de conduit ou orifice d'écoulement 32 qui lui sont propres; ce qui a pour avantage, en combinaison avec les moyens d'ouvertures intégrés, de délivrer un produit sans contact direct avec le dispositif, en particulier, avec le support de capsule 40; ce qui assure une absence de contamination croisée des boissons, une meilleure hygiène, moins de nettoyage et une plus grande simplicité dans la conception même du dispositif de préparation. Plus précisément, la capsule peut comprendre une coupelle 33, en plastique ou autre, pour former ou loger les éléments fonctionnels, à savoir les éléments en reliefs, la membrane d'ouverture scellée 30 et les moyens de conduit 32. La coupelle 33 peut être fermée pour former la chambre 34 au moyen d'une second membrane d'entrée 30 scellée sur des bords de scellage 36 de la capsule. La configuration de la capsule peut, bien entendu, prendre bien d'autres concepts et/ou formes sans pour autant sortir du cadre de l'invention. La capsule pourrait, par exemple, comprendre un corps formé en grande partie en matière souple (sachet) qui s'insère dans le dispositif de façon équivalente.

Une capsule préférée est décrite plus en détails dans la demande de brevet Euro-PCT No. 03/00384 déposée le 13 janvier 2003; dont le contenu en entier est ajouté à la présente demande ici par la présente référence.

Le dispositif comprend un second sous-ensemble ou système d'injection 2 qui coopère en fermeture avec le porte-capsule 40 pour définir une enceinte d'injection renfermant la capsule. Dans ce premier mode, le second sous-ensemble ou système d'injection 2 est formé d'un élément de perforation et d'injection 5 central, dont les détails de constructions seront donnés ci-après, et d'un moyen d'actionnement 6 solidaire de l'élément 5 de manière à le déplacer selon plusieurs modes de mouillage le point même d'injection à l'intérieur de la capsule. Pour cela, l'élément de perforation et d'injection passe au travers d'une base de tête 7 laquelle est déplacée en fermeture relativement au support de capsule 40. Il est entendu que la base de tête peut être mobile relativement à un support 40 fixe ou inversement, ou encore, les deux peuvent être mobiles en fermeture. Sur la base de tête 7 est monté le moyen d'actionnement sous forme d'un support mobile en forme de cloche appelé "cloche mobile 6" dans la suite de la description.

La cloche mobile 6 est associée en guidage élastique en translation par rapport à la base de tête 7 au moyen de plusieurs tubes de guidage 70, 71 de la base de tête et de ressorts 72, 73 insérés entre l'embase supérieure 79 de la base de tête et la cloche mobile 6, de telle sorte qu'en position d'ouverture du dispositif, la base de tête 7 soit appliquée sensiblement dans le fond de la cloche mobile sous l'effet de la compression des ressorts. Pour cela, l'embase supérieure 79 est reliée solidairement aux tubes de la base de tête par tout moyen approprié de connexion comme des vis 790.

La base de tête 7 comprend, en plus, des moyens d'étanchéité périphériques 74, tels qu'un joint élastomère, agencé pour s'appuyer en fermeture contre les bords périphériques 41 du porte-capsule 40. La base de tête comprend donc une partie qui s'applique au plus près de la surface d'entrée de la capsule au moment de la fermeture; ce qui permet l'introduction de l'élément de perforation et d'injection central 5 au travers de la capsule, plus précisément, au travers de la membrane d'entrée 30 de la capsule. Un élément d'étanchéité supplémentaire 75 peut aussi entourer l'élément de perforation et d'injection pour éviter une remontée de fluide au travers du système d'injection et en dehors du dispositif.

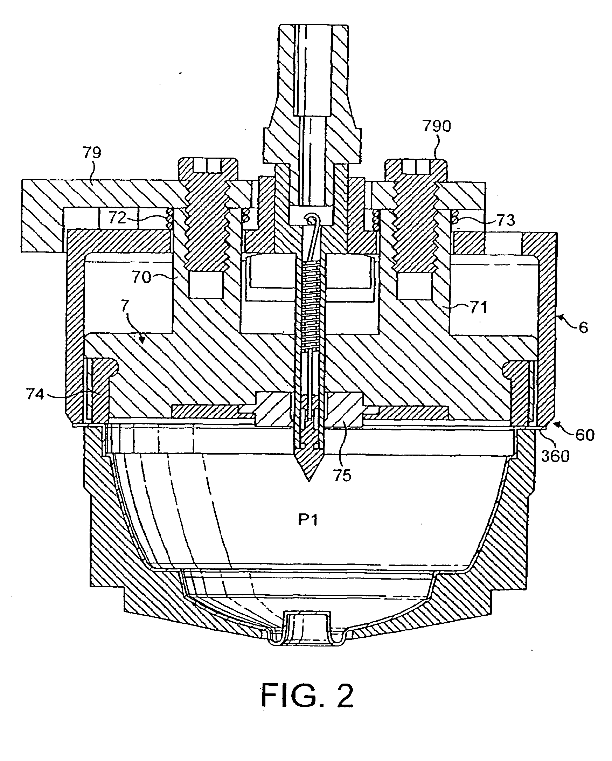

Le mode de l'invention représenté est basé sur le principe que le moyen d'actionnement de l'élément d'injection ou cloche mobile 6 étant solidaire de l'élément 5, permet en fonction de sa position relative par rapport au support de capsule de modifier la position de l'élément de perforation et d'injection dans la capsule et donc de changer la configuration de mouillage de la substance contenue dans la chambre fermée de la capsule. Plus précisément, la cloche mobile 6 possède des moyens de détection en fonction du type même de capsule qui sont formés par des bords d'engagement 60 aptes à engager des bords complémentaires 360 de la capsule et donc, par conséquent, qui sont aptes à repousser la cloche 6 par rapport à la base de tête 7 en direction A en fonction de la largeur des bords de la capsule (comme le montre la figure 2). La position d'introduction de l'élément de perforation peut donc prendre deux positions distinctes; selon que la capsule possède des bords larges ou des extensions de bords 360b qui s'engagent à l'encontre des bords 60 de la cloche 6 ou bien alors une configuration de bords étroite 360a, que les bords de la cloche ne rencontrent alors pas.

Ainsi la figure 2 montre une configuration dans laquelle la capsule possède des extensions ou bords larges 360, pour permettre de repousser la cloche 6 et donc d'arrêter l'élément de perforation et d'injection dans une position d'introduction P1 proche de l'entrée de la capsule. Une telle position permet d'injecter le fluide sensiblement au niveau de l'entrée du lit de substance; ce qui convient bien aux produits moulus à extraire, par exemple.

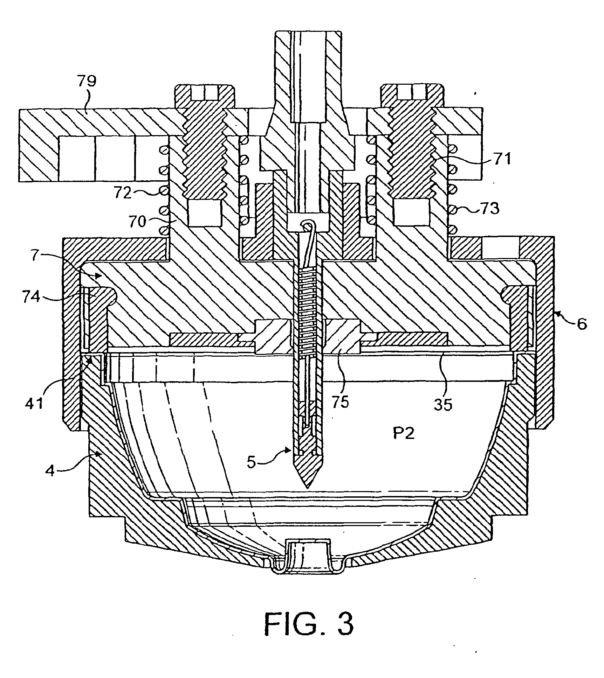

La figure 3 montre une configuration dans laquelle la capsule possèdent des bords plus étroits 360a qui laissent passer la cloche 6 le long du support de capsule lors de la fermeture du dispositif sans la repousser. Dans ce cas, l'élément de perforation et d'injection est autorisé à atteindre une position P2 plus profonde dans la capsule. Une telle position s'avère avantageuse pour mouiller la substance par sa base; entraînant ainsi une désagrégation progressive de la masse de substance. Pour les substances solubles, par exemple, un tel mode de mouillage s'avère particulièrement efficace.

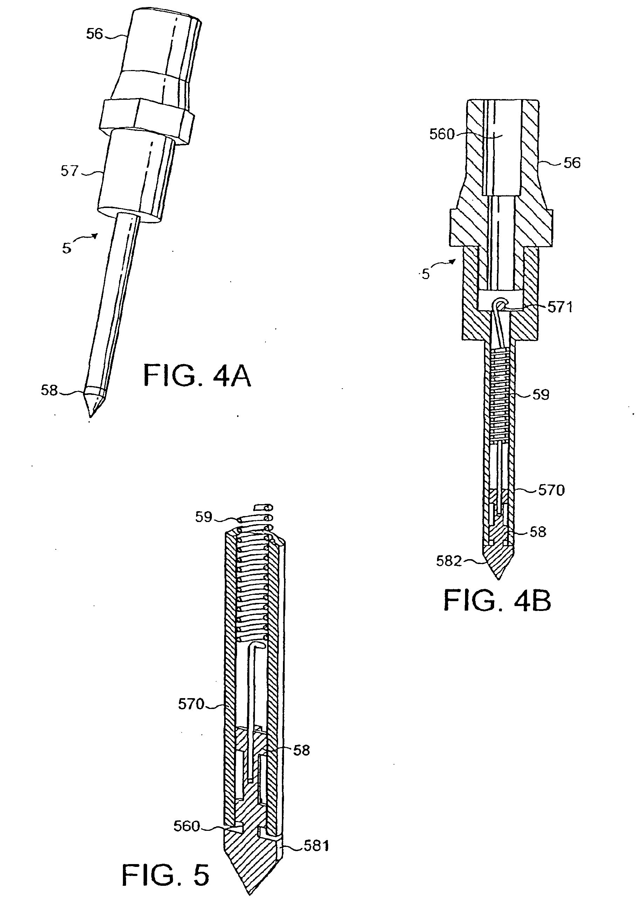

Les figures 4A, 4B et 5 montrent en détail une configuration préférée de l'élément de perforation et d'injection 5. L'élément de perforation et d'injection 5 possède un embout 56 raccordable à l'alimentation en fluide sous pression du dispositif de préparation. L'embout comprend un alésage creux 560 traversant pour transporter le fluide et se raccorde directement à son extrémité inférieure à une portion creuse allongée d'injection 57. La portion creuse 57 se termine par un tube ouvert 570 lequel est obturé, de manière contrôlée, par un pointeau central 58 sous l'action d'un ressort de traction 59 logé dans la portion creuse et rattaché à un point fixe 571 de la portion creuse. Le pointeau central 58 possède des ailettes internes permettant de faire coulisser le pointeau central dans la portion de tube de manière centrée et sans coincement tout en laissant des passages pour le fluide. Le pointeau possède une surface d'obturation 582 sur laquelle agit le fluide sous pression pour repousser le pointeau et libérer une ouverture ou passage 560 de forme circulaire et d'épaisseur contrôlée (Figure 5). Le contrôle de l'épaisseur est réalisée par la force choisie du ressort 59. Ainsi, il est préférable que l'ouverture soit d'épaisseur au plus égale à 2 mm, de préférence, inférieure à 1 mm, de manière encore plus préférée, inférieure ou égale à 0.5 mm. La faible épaisseur de l'ouverture a pour effet de produire une nappe d'arrosage couvrant une surface significative de la substance mais aussi de vélocité suffisante pour former un effet de jet au travers de la substance.

Le mode des figures 6 à 13 est une variante d'un dispositif de l'invention dans laquelle le système d'injection 2B, en particulier, diffère sensiblement de celui précédemment décrit tandis que les autres moyens du dispositif peuvent rester identiques ou similaires. Ce mode diffère principalement du précédent en ce qu'il comprend deux éléments de perforation et d'injection distincts; lesquels sont déplaçables relativement l'un par rapport à l'autre pour procurer au moins deux modes de mouillage différents de la substance dans la capsule.

Le détail du système d'injection est ici décrit en relation avec la figure 7. Un premier élément de perforation et d'injection est visible sur la figure 7 sous forme d'une plaque multi-pointe 50 mobile en opposition de mouvement par rapport à un second élément de perforation et d'injection sous forme d'une pointe excentrée 51 montée solidairement au moyen d'actionnement appelé encore "cloche mobile 6B".

La plaque multi-pointe 50 possède une multitude d'éléments perçants destinés à perforer la surface d'entrée 30 de la capsule et permettre l'entrée du fluide au travers des multiples trous ainsi créés (figure 9). La plaque est montée sur une base de tête 7B comprenant, entre autre, une grille de répartition de pression 700 et un capot interne 710 connectable à la grille par clipsage ou tout moyen équivalent. La grille de répartition de pression sert, en particulier, à maintenir la surface de la capsule hors du contact des pointes dans le cas où l'autre mode de mouillage est sélectionné et la capsule est mise sous pression de liquide.

Un joint périphérique 720 en forme de bague est prévu pour entourer le capot 710 et définir ainsi une chambre interne 730 pour le remplissage en fluide sous pression et permettre ainsi la répartition isobare du fluide au travers de la plaque multi-pointe et de la grille. La base de tête comprend aussi une cloche fixe 735 reliée par dessus les éléments 700, 710, 720 faisant la liaison par guidage élastique avec la cloche mobile 6. Pour ce faire, la cloche fixe 735 comprend des tubes de guidage 731 au travers desquels la cloche mobile 6B peut coulisser en glissement. Les tubes de guidage sont reliés à l'embase supérieure 79 de la base de tête par des vis ou tout autre moyens de connexion équivalent. Des ressorts 736 sont disposés entre la cloche mobile 6 et l'embase 79, le long des tubes 732, de façon à générer une force élastique nécessaire à contrer élastiquement le déplacement de la cloche mobile 6 par rapport à la cloche fixe 735.

La cloche mobile 6B supporte la pointe d'injection 51 laquelle est disposée de manière excentrée par rapport à l'axe I central du système d'injection coïncidant avec l'axe de la capsule. La pointe peut être connectée par l'intermédiaire d'une douille 510 vissée dans un logement de la cloche 6B et qui se prolonge au travers de la base de tête par une aiguille creuse 512 comprenant une partie biseautée finissant par une ouverture d'injection 513. L'ouverture d'injection 513 est dirigée de telle manière qu'elle produise un mouvement de fluide tourbillonnant ou "vortex" à l'intérieur de la capsule lorsque ce mode d'injection est activé; ce qui provoque un brassage du liquide avec la substance contenue dans la capsule. Pour cela, la direction d'injection est inclinée par rapport à l'axe diamétral de la capsule et, de plus, est préférentiellement inclinée vers le bas comme le montre la figure 13.

Les éléments d'injection 50, 51 sont agencés l'un par rapport à l'autre de façon à être alternativement activés à l'intérieur de la capsule. Plus précisément, la plaque multi-pointe est articulée à la base de tête 7B d'une part, et à la cloche mobile 6B, d'autre part, au moyen d'un système de commande à bascule. Pour cela, la plaque multi-pointe se prolonge par une tige 55 au travers de la base de tête 7 et est reliée aux premières extrémités de deux leviers 80, 81 par une articulation commune centrale 734. Les leviers 80, 81 sont eux-même reliés en leur centre sur des articulations 738, 739 de la base de tête et leurs secondes extrémités sont reliées à des articulations 600, 601 de la cloche mobile 6B. Les articulations peuvent être formées d'axes de rotation simple ou d'axes associant rotation et translation comme des articulations du type oblong de façon à faciliter les mouvements et éviter les coincements.

Le mode de fonctionnement du système d'injection peut maintenant être expliqué en détails en relation avec les figures 8,9 10 et 11.

Lorsqu'une capsule 3A à bords étroits 360a est introduite dans le support de capsule et que le dispositif est refermé comme le montre la figure 8, les bords d'engagement 60 ne détecte alors pas un bord complémentaire de capsule; ce qui fait que la cloche mobile n'est pas repoussée vers le haut et recouvre donc le support partiellement. Dans cette configuration, la pointe d'injection excentrée 51 est donc entraînée de manière solidaire avec la cloche mobile et prend une position d'injection P3 à l'intérieur de la capsule. La base de tête reste alors en appui interne à l'intérieur de la cloche mobile sous l'effet des ressorts 736 qui maintiennent en cohésion élastique ces deux éléments. La plaque multi-pointe 55 est alors maintenue en position rétractée par rapport à la surface de la grille de répartition 700 et donc aussi par rapport à la surface de la capsule (figure 8). La pointe d'injection excentrée est alors le seul élément en engagement dans la capsule. Cette position correspond alors à celle montrée à la figure 13 dans laquelle, lors de l'introduction du fluide sous pression dans la capsule au travers de la seule pointe d'injection, un effet tourbillonnant ou vortex est créé par la direction particulière du fluide dans la capsule.

Lorsqu'une capsule 3B à extension de bords est introduite dans le dispositif et le dispositif est refermé, comme le montrent les figures 9 et 10, les bords d'engagement 60 de la cloche mobile rentrent alors au contact des bords 360b de la capsule. Ce contact a pour effet de repousser la cloche mobile en direction A; mouvement qui actionne alors le moyen à bascule 8 (leviers 80, 81) pour forcer la plaque multi-pointe en direction opposée B. La plaque multi-pointe prend alors la position d'injection P4 dans la capsule. La pointe d'injection excentrée 51 solidaire elle-même de la cloche mobile reste alors en position rétractée par rapport à la surface de la capsule.

L'injection d'eau se fait alors par la pointe d'injection qui alimente, à partir d'une alimentation 518 telle qu'un tube flexible d'arrivée d'eau reliée en amont à une pompe, la chambre en fluide puis au travers de la plaque multi-pointe.

Un tel mode de réalisation présente l'avantage d'utiliser une seule source d'alimentation en eau pour deux éléments séparés et commutables en opposition de mouvement.

La figure 12 montre une vue de détail d'un mode préféré de la plaque multi-pointe 50. La plaque peut comprendre une portion de plaque métallique 52 dans laquelle est découpée et pliée une multitude de lamelles individuelles 53 suffisamment fines mais rigides pour procurer un perçage efficace et reproductible sur un nombre important de cycles au travers de la surface de la capsule. Le pliage à angle droit de chaque lamelle permet de définir une lumière 54 pour le passage de l'eau de la chambre au travers de la portion de plaque 52. Des ouvertures additionnelles peuvent être ajoutées si besoin.

A la figure 13, le dispositif de préparation est représenté dans un mode de mouillage dans lequel le liquide est injecté dans la capsule de manière à créer un mouvement tourbillonnant du liquide autour du centre de la capsule accompagné notamment de réflexions multiples du jet contre les parois intérieures de celle-ci. On voit que l'élément de perforation et d'injection 512, plus précisément, l'orifice d'injection 513 est disposé à distance du centre de la capsule (matérialisé par le point C sur la surface interne 700 du système) et est donc excentré par rapport à l'axe vertical de celle-ci. La direction du jet d'injection J ainsi créé est donc orienté d'une part selon un axe qui passe à l'écart du centre C et d'autre part selon un deuxième axe orienté vers le fond de la capsule. Par cette configuration de la position de l'orifice d'injection 513 dans la capsule et l'orientation particulière de la direction d'injection J, on produit un mouvement tourbillonnant autour du centre de la capsule accompagné de réflexions multiples contre les parois internes de celle-ci. Le mouvement général ainsi produit permet d'obtenir un brassage efficace du liquide avec la substance contenue dans la capsule et d'atteindre une dissolution ou mouillage complet de la substance.

Aux figures 14 et 15 on a représenté un autre mode de réalisation d'un dispositif pour la préparation d'une boisson par injection d'un liquide au travers d'une capsule selon l'invention. Le dispositif de préparation est représenté en position de fermeture dans ces deux figures, mais selon un premier mode de mouillage à la figure 14 et selon un deuxième mode de mouillage à la figure 15. Par mode de mouillage on entend dans le cadre de la présente invention le type de mouillage de la substance contenue dans la capsule 2 que l'on souhaite obtenir, le type de mouillage dépendant essentiellement de la nature de ladite substance.

A la figure 14, le dispositif de préparation est représenté dans un premier mode de mouillage dans lequel le liquide est injecté dans la capsule de manière à créer un mouvement tourbillonnant du liquide autour du centre C de la capsule accompagné notamment de réflexions multiples du jet contre les parois intérieures de celle-ci comme cela a été décrit ci-dessus en liaison avec les figures 1 et 2. Ce mode de mouillage convient particulièrement bien aux capsules contenant des substances solubles car elle permet une dissolution complète et rapide de ce type de substances.

A la figure 15, le dispositif de préparation est représenté dans un deuxième mode de mouillage dans lequel le liquide est injecté dans la capsule de manière à créer, en plus d'un mouvement tourbillonnant du liquide autour du centre C de la capsule, un mouillage dans la partie supérieure de la capsule à l'aide d'un jet divergent de liquide sous la forme d'une fine couche de liquide pour mouiller par le haut la substance contenu dans la capsule. Ce mode de mouillage convient particulièrement bien aux capsules contenant des substances à extraire car elle permet une dissolution complète et rapide de ce type de substances.

Selon ce deuxième mode de réalisation de l'invention, le dispositif de préparation comprend un élément de perforation et d'injection 500 comprenant un premier orifice d'injection 513 disposé et orienté de manière identique à l'orifice d'injection 513 de l'élément de perforation et d'injection décrit en liaison avec les figures 8-11, et un deuxième moyen d'injection 515 dont l'axe d'injection s'étend sensiblement horizontalement pour produire le jet divergent sous la forme d'une fine couche de liquide. En se référant également aux figures 16 et 17, on voit que dans l'exemple illustré l'élément de perforation et d'injection 500 se présente sous la forme d'une aiguille creuse comportant un canal 513a qui débouche vers l'extérieur à une première extrémité par l'intermédiaire des premier 513 et deuxième 515 moyens d'injection. Le canal 513a communique également avec le canal d'amenée 20 dans sa partie médiane par une ouverture 21. L'élément de perforation et d'injection est prolongé à l'extrémité opposée aux moyens d'injection 513 et 515 par un doigt d'actionnement 22 coopérant avec un levier 23 commandé par des moyens de commutation (non représentés) solidaires de la tête 2C. L'élément de perforation et d'injection 500 comprend dans sa partie médiane une portion de plus grand diamètre dans laquelle est ménagée l'ouverture 21 et par laquelle il est monté mobile en translation dans un passage 24 épaulé s'étendant parallèlement à l'axe vertical de la tête d'injection ménagée dans le noyau 25, un ressort de rappel 26 étant interposé entre le fond du passage et un épaulement de l'élément de perforation et d'injection 500. Deux joints O-ring 270, 271 sont placés de part et d'autre de l'ouverture 21 sur l'élément de perforation et d'injection 500 pour coopérer avec la surface intérieure du passage 24.

Dans ce mode de réalisation, l'élément de perforation 500 est mobile entre deux positions distinctes, à savoir une première position (figure 14) dans laquelle seul le premier orifice 513 débouche à l'intérieur de la capsule 3 et qui correspond au premier mode de mouillage et une deuxième position (figure 15) dans laquelle le premier orifice 513 ainsi que le deuxième moyen d'injection 515 débouchent à l'intérieur de la capsule 3 et qui correspond au deuxième mode de mouillage. Le passage du premier mode de mouillage au deuxième mode de mouillage est réalisé via des moyens de commutation qui agissent sur l'élément de perforation et d'injection 500 à l'encontre du ressort de rappel 26 par l'intermédiaire du levier 23. Il est bien entendu que le diamètre du canal d'amenée 20 et de l'ouverture 21 ainsi que la course de l'élément de perforation et d'injection pour le passage du premier au deuxième mode de mouillage 515 sont agencés pour que l'ouverture 21 communique en tout temps au moins partiellement avec le canal d'amenée 20 quel que soit le mode de mouillage sélectionné.

De préférence, et comme cela ressort des figures 16 et 17, le deuxième moyen d'injection 515 permettant de produire un jet divergent sous la forme d'une fine couche de liquide comprend une pluralité d'orifices 515a répartis sur une partie du pourtour de l'élément de perforation et d'injection 500. L'élément de perforation et d'injection 500 étant disposé de manière excentrée à l'intérieur de la capsule, et plus précisément au voisinage de la paroi latérale de celle-ci, les orifices 515a sont dirigés vers le centre de la capsule. Pour des raisons liées à la fabrication de l'élément 500, les orifices 515a sont avantageusement décalés en hauteur les uns par rapport aux autres. Ces orifices 515a produisent ainsi une pluralité de jets divergents qui se recouvrent pour former une fine couche de liquide qui arrose et mouille la substance contenue dans la partie supérieure la capsule.

Bien entendu, on peut aussi envisager de former la fine couche de liquide à partir d'un seul orifice 515b ayant la forme d'une fente s'étendant transversalement à la direction longitudinale de l'élément 500 comme cela est représenté aux figures 18 et 19. Dans ce cas, le jet divergent s'étend sur un secteur circulaire suffisamment large pour mouiller sensiblement la totalité de la substance se trouvant dans la partie supérieure de la capsule.

On notera que les orifices 515a et l'orifice 515b sont respectivement agencés pour que la fine couche de liquide soit produite de manière sensiblement continue sur un secteur angulaire compris entre 90° et 180° et de préférence de l'ordre de 160°. En outre, ces orifices 515a et 515b sont agencés pour produire une couche de liquide ayant une épaisseur inférieure ou égale à 0,5mm et de préférence inférieure à 0,3mm. A cet effet, pour chacun des orifices 515a on choisira de préférence un diamètre de l'ordre de 0,5 mm et pour l'orifice 515b on choisira un diamètre de l'ordre de 0,7 mm.

Selon une variante avantageuse de ce deuxième mode de réalisation, l'axe des deuxièmes moyens d'injection 515, c'est-à-dire l'axe des orifices 515a respectivement 515b définissant la direction du jet de liquide, fait un angle © compris entre 0° et 25° avec l'horizontale et de préférence un angle de l'ordre 15°. Le liquide injecté par ces orifices est ainsi dirigé vers le haut et se réfléchit dans un premier temps contre la surface inférieure de l'opercule et est renvoyé dans un second temps vers le lit de substance en étant beaucoup plus dispersé. Ce faisant, l'homogénéité du mouillage de la substance est améliorée.

## Revendications

1. Dispositif pour préparer une boisson par injection d'eau au travers d'une capsule (3, 3A, 3B) contenant une substance à dissoudre et/ou à extraire,
comprenant au moins un système d'injection d'eau (2) destiné à introduire de l'eau à l'intérieur de la capsule (3),
le système d'injection (2, 2B, 2C) étant commutable pour être sélectionné selon au moins deux modes différents de mouillage de la substance de façon à adapter le mouillage en fonction du type de capsule et/ou de la nature de la substance contenue dans la capsule **caractérisé en ce que** le système d'injection comprend au moins un élément de perforation et d'injection (5, 50, 51, 500) qui est déplaçable dans la capsule dans au moins deux positions distinctes par référence à la surface perforée de la capsule.

2. Dispositif selon la revendication 1, **caractérisé en ce que** l'élément de perforation (5, 50, 51, 500) est déplaçable selon deux profondeurs différentes dans la capsule.

3. Dispositif selon la revendication 2, **caractérisé en ce que** l'élément de perforation (5) est déplaçable dans une première position haute (P1) dans la capsule pour mouiller la substance contenue dans la capsule par le haut et une seconde position basse (P2) dans la capsule pour mouiller la substance contenue dans la capsule par le bas.

4. Dispositif selon la revendication 3, **caractérisé en ce que** l'élément de perforation (500) est déplaçable dans une première position haute dans la capsule dans laquelle au moins un point d'injection (513) est découvert dans la capsule et une seconde position plus basse dans la capsule dans laquelle un nombre plus important de points d'injection (515) sont découverts dans la capsule.

5. Dispositif pour préparer une boisson par injection d'eau au travers d'une capsule (3, 3A, 3B) contenant une substance à dissoudre et/ou à extraire, comprenant au moins un système d'injection d'eau (2) destiné à introduire de l'eau à l'intérieur de la capsule (3), le système d'injection (2, 2B, 2C) étant commutable pour être sélectionné selon au moins deux modes différents de mouillage de la substance de façon à adapter le mouillage en fonction du type de capsule et/ou de la nature de la substance contenue dans la capsule ; le système d'injection comprenant au moins un premier élément de perforation (50) et d'injection et au moins un second élément de perforation (51) et d'injection distinct du premier élément de perforation et d'injection; lesquels sont déplaçables relativement l'un par rapport à l'autre; chacun d'eux procurant un mode de mouillage différent de la substance dans la capsule **caractérisé en ce que** le premier et deuxième éléments (50, 51) sont déplaçables en opposition de phase l'un par rapport à l'autre dans au moins une première position où le premier élément est en engagement dans la capsule et le deuxième élément est en retrait de la capsule et inversement une deuxième position où le premier élément est en retrait de la capsule et le deuxième élément est en engagement dans la capsule.

6. Dispositif selon la revendication 5, **caractérisé en ce que** le deuxième élément d'injection est une plaque multi-pointe (50) destinée, lors de son engagement dans la capsule, à perforer la surface de la capsule en de multiples endroits.

7. Dispositif selon la revendication 5, **caractérisé en ce que** le deuxième élément est une pointe d'injection localisée sensiblement au centre de la capsule et configurée de manière à produire un arrosage divergent multidirectionnel sous forme d'au moins une fine couche d'eau.

8. Dispositif selon la revendication 5 ou 6 **caractérisé en ce que** le premier élément (51) comprend au moins un point d'injection à l'intérieur de la capsule sous forme d'un jet (J) configuré de manière à créer dans la capsule un mouvement tourbillonnant qui provoque un brassage du liquide avec la substance.

9. Dispositif selon l'une quelconque des revendications précédentes, **caractérisé en ce qu'** un moyen d'actionnement (6, 6B) est prévu pour déplacer au moins ledit élément de perforation et d'injection selon les deux positions de manière sélective par reconnaissance de la taille et/ou la géométrie propre de la capsule.

10. Dispositif selon la revendication 9, **caractérisé en ce que** le moyen d'actionnement comprend au moins un support solidaire (6, 6B) dudit élément de perforation et d'injection; lequel support est déplaçable élastiquement par rapport à une base de tête, le moyen d'actionnement comprenant au moins un moyen de détection (60) destiné à entraîner le moyen d'actionnement en mouvement relativement à la base de tête par engagement de manière complémentaire d'un bord de la capsule.

11. Dispositif selon la revendication 10, **caractérisé en ce que** le système d'injection (2) comprend une unique pointe d'injection centrale laquelle est solidaire du moyen d'actionnement (6) de façon à se positionner dans une position basse (P2) dans la capsule lorsque le moyen de détection ne rencontre pas un bord complémentaire (36) de la capsule et une position haute (P1) dans la capsule lorsque le moyen de détection rencontre et engage un bord complémentaire de la capsule.

12. Dispositif selon la revendication 11, **caractérisé en ce que** la pointe d'injection centrale (5) est configurée de manière à produire un arrosage divergent multidirectionnel sous forme d'au moins une fine couche d'eau.

13. Dispositif selon la revendication 12, **caractérisé en ce que** la fine couche s'étend de manière continue sur le pourtour de la pointe et arrose la substance dans la capsule de manière sensiblement circulaire.

14. Dispositif selon la revendication 12, **caractérisé en ce que** plusieurs couches d'eau discontinues s'étendent de manière sensiblement répartie sur le pourtour de la pointe.

15. Dispositif selon la revendication 12, **caractérisé en ce que** la fine couche d'eau possède une épaisseur inférieure ou égale à 0,5 mm.

16. Dispositif selon la revendication 11, **caractérisé en ce que** la pointe (5, 582) est configurée de façon à s'ouvrir par la pression d'eau à l'encontre d'un élément élastique (59) de façon à libérer un passage d'épaisseur déterminée en fonction de la pression et créer ainsi ladite couche d'eau.

17. Dispositif selon la revendication 11, **caractérisé en ce que** le système d'injection (2B) comprend un premier élément d'injection et de perforation (51) sous forme d'une pointe d'injection excentrée laquelle est solidaire du moyen d'actionnement (6B) et un second élément d'injection et de perforation (50) sous forme d'une plaque multi-pointe laquelle est reliée par un moyen de commande à bascule (8) au moyen d'actionnement et est montée en déplacement relatif par rapport à la base de tête; ladite plaque multipointe (50) étant ainsi commandée dans une position de perforation de la surface de la capsule lorsque le moyen de détection (60) du moyen d'actionnement (6B) rencontre et engage un bord complémentaire (360b) de la capsule et est commandée en position de rétraction par rapport à la surface de la capsule et permettant, par conséquent, l'entrée de la pointe d'injection (51) dans la capsule lorsque le moyen de détection ne rencontre pas le bord complémentaire (360a) de la capsule.

18. Dispositif selon la revendication 17, **caractérisé en ce qu'**il comprend une la base de tête (7B) forme un ensemble creux de guidage de la plaque multipointe (50) et possède des rebords d'étanchéité (74) se refermant sur un porte-capsule (40) pour recevoir la capsule; la pointe d'injection étant en communication avec ledit ensemble pour distribuer l'eau dans l'ensemble creux et au travers ou sensiblement au niveau de la plaque multi-pointe (50).

19. Dispositif selon l'une quelconque des revendications précédentes, **caractérisé en ce que** la température d'injection ou encore le débit d'injection dans la capsule sont commutables.

20. Procédé pour préparer une boisson par injection d'eau au travers d'une capsule contenant une substance à dissoudre et/ou à extraire dans lequel le liquide est injecté au travers de la capsule selon au moins deux modes d'injection différents, chacun pouvant être sélectionné en fonction du type de capsule et/ou de la nature de la substance contenue dans ladite capsule le liquide étant injecté selon au moins deux modes dans lesquels les points d'injection sont en nombre distincts **caractérisé en ce que** le liquide est injecté selon deux modes d'injection qui définissent deux profondeurs d'injection distinctes dans la capsule.

21. Procédé selon la revendication 20, **caractérisé en ce que** le liquide est injecté selon un premier mode de telle manière à créer dans ladite capsule un mouvement tourbillonnant du liquide injecté provoquant un brassage avec ladite substance.

22. Procédé selon la revendication 21, **caractérisé en ce que** le liquide est injecté selon un second mode de telle manière à former un arrosage selon plusieurs points d'entrée dans la capsule et à une vitesse d'injection plus lente que selon le premier mode.

23. Procédé pour préparer une boisson par injection d'eau au travers d'une capsule contenant une substance à dissoudre et/ou à extraire dans lequel le liquide est injecté au travers de la capsule selon au moins deux modes d'injection différents, chacun pouvant être sélectionné en fonction du type de capsule et/ou de la nature de la substance contenue dans ladite capsule **caractérisé en ce que** le liquide est injecté selon au moins deux modes d'injection dans lesquels la vitesse d'introduction du liquide dans la capsule est différente, le liquide est injecté selon un premier mode de telle manière à créer dans ladite capsule un mouvement tourbillonnant du liquide injecté provoquant un brassage avec ladite substance, et le liquide est injecté selon un second mode de telle manière à former un arrosage selon plusieurs points d'entrée dans la capsule et à une vitesse d'injection plus lente que selon le premier mode.

24. Procédé selon l'une quelconque des revendications 20 à 23, **caractérisé en ce que** le mode d'injection approprié est sélectionné automatiquement par reconnaissance de la taille et/ou de la forme particulière de la capsule.

25. Procédé selon la revendication 24, **caractérisé en ce que** la sélection du mode d'injection se fait selon deux positions selon que les capsules possèdent un bord d'engagement ou non.

## Patentansprüche

1. Vorrichtung zur Zubereitung eines Getränks durch Wassereinspritzung durch eine Kapsel (3, 3A, 3B), welche eine Substanz zum Auflösen und/oder zum Extrahieren enthält,
mit mindestens einem Wassereinspritzsystem (2), das zum Einführen des Wassers in das Innere der Kapsel (3) ausgelegt ist,
wobei das Einspritzsystem (2, 2B, 2C) derart veränderbar ist, dass es nach mindestens zwei unterschiedlichen Befeuchtungsarten der Substanz so ausgewählt wird, dass die Befeuchtung in Abhängigkeit der Kapselart und/oder der Beschaffenheit der in der Kapsel enthaltenen Substanz angepasst wird, **dadurch gekennzeichnet, dass** das Einspritzsystem mindestens ein Perforations- und Einspritzelement (5, 50, 51, 500) aufweist, das in der Kapsel in mindestens zwei verschiedene Positionen in Bezug auf die perforierte Kapseloberfläche verschiebbar ist.

2. Vorrichtung gemäß Anspruch 1, **dadurch gekennzeichnet, dass** das Perforationselement (5,50,51,500) in zwei unterschiedliche Tiefen in der Kapsel verschiebbar ist.

3. Vorrichtung gemäß Anspruch 2, **dadurch gekennzeichnet, dass** das Perforationselement (5) in eine erste, obere Position (P₁) in der Kapsel verschiebbar ist, um die in der Kapsel enthaltene Substanz von oben zu befeuchten, und in eine zweite, untere Position (P₂) in der Kapsel verschiebbar ist, um die in der Kapsel enthaltene Substanz von unten zu befeuchten.

4. Vorrichtung gemäß Anspruch 3, **dadurch gekennzeichnet, dass** das Perforationselement (500) in eine erste, obere Position in der Kapsel verschiebbar ist, in der mindestens eine Einspritzstelle (513) in der Kapsel unbedeckt ist, und in eine zweite, weiter unten in der Kapsel angeordnete Position verschiebbar ist, in der eine größere Anzahl an Einspritzstellen (515) in der Kapsel unbedeckt sind.

5. Vorrichtung zur Zubereitung eines Getränks durch Wassereinspritzung durch eine Kapsel (3, 3A, 3B) hindurch, welche eine Substanz zum Auflösen und/oder zum Extrahieren enthält, mit mindestens einem Wassereinspritzsystem (2) zum Einführen des Wassers in das Innere der Kapsel (3),
wobei das Einspritzsystem (2, 2B, 2C) derart veränderbar ist, dass es nach mindestens zwei unterschiedlichen Befeuchtungsarten der Substanz so ausgewählt werden kann, dass die Befeuchtung entsprechend der Kapselart und/oder der Beschaffenheit der in der Kapsel enthaltenen Substanz angepasst wird;
wobei das Einspritzsystem mindestens ein erstes Perforations- und Einspritzelement (50) und mindestens ein zweites, von dem ersten Element verschiedenes Perforations- und Einspritzelement (51) aufweist, welche relativ in Bezug zueinander verschiebbar sind; wobei sie jeweils für eine unterschiedliche Art der Befeuchtung der Substanz in der Kapsel sorgen, **dadurch gekennzeichnet, dass** das erste und zweite Element (50,51) gegenphasig relativ zueinander in mindestens eine erste Position verschiebbar sind, in der sich das erste Element in Eingriff mit der Kapsel und das zweite Element außer Eingriff mit der Kapsel befindet, sowie umgekehrt in eine zweite Position verschiebbar sind, in der sich das erste Element außer Eingriff mit der Kapsel und das zweite Element in Eingriff mit der Kapsel befindet.

6. Vorrichtung gemäß Anspruch 5, **dadurch gekennzeichnet, dass** das zweite Einspritzelement eine Platte mit mehreren Spitzen (50) darstellt, die bei ihrem Eingriff in die Kapsel die Kapseloberfläche an mehreren Stellen perforieren soll.

7. Vorrichtung gemäß Anspruch 5, **dadurch gekennzeichnet, dass** das zweite Element eine etwa in der Mitte der Kapsel angeordnete Einspritzspitze darstellt, die so ausgeführt ist, dass sie eine in mehrere Richtungen auseinander laufende Berieselung in Form von mindestens einer dünnen Wasserschicht bereitstellt.

8. Vorrichtung gemäß Anspruch 5 oder 6, **dadurch gekennzeichnet, dass** das erste Element (51) mindestens eine Einspritzstelle im Inneren der Kapsel in Form eines Strahls (J) aufweist, der derart ausgebildet ist, dass er in der Kapsel eine Wirbelbewegung erzeugt, die für eine Vermischung der Flüssigkeit mit der Substanz sorgt.

9. Vorrichtung gemäß einem der vorhergehenden Ansprüche, **dadurch gekennzeichnet, dass** eine Betätigungseinrichtung (6, 6B) vorgesehen ist, um mindestens das Perforations- und Einspritzelement durch Erkennung der Größe und/oder der jeweiligen Geometrie der Kapsel wahlweise in die beiden Positionen zu verschieben.

10. Vorrichtung gemäß Anspruch 9, **dadurch gekennzeichnet, dass** die Betätigungseinrichtung mindestens eine einstückige Halterung (6, 6B) des Perforations- und Einspritzelementes aufweist, dass die Halterung in Bezug auf einen Kopfsockel elastisch verschiebbar ist, wobei die Betätigungseinrichtung mindestens eine Erfassungseinrichtung (60) aufweist, die die Betätigungseinrichtung relativ zu dem Kopfsockel durch einen zugehörigen Eingriff einer Kante der Kapsel in Bewegung versetzen soll.

11. Vorrichtung gemäß Anspruch 10, **dadurch gekennzeichnet, dass** das Einspritzsystem (2) eine einzige, mittige Einspritzspitze aufweist, welche einstückig mit der Betätigungseinrichtung (6) derart ausgebildet ist, dass sie sich in einer unteren Stellung (P₂) in der Kapsel platziert, wenn die Erfassungseinrichtung nicht auf eine zugehörige Kante (36) der Kapsel trifft, und in einer oberen Stellung (P₁) in der Kapsel platziert, wenn die Erfassungseinrichtung auf eine zugehörige Kante der Kapsel trifft und in diese eingreift.

12. Vorrichtung gemäß Anspruch 11, **dadurch gekennzeichnet, dass** die mittige Einspritzspitze (5) derart ausgebildet ist, dass sie eine in mehrere Richtungen auseinander laufende Berieselung in Form von mindestens einer dünnen Wasserschicht erzeugt.

13. Vorrichtung gemäß Anspruch 12, **dadurch gekennzeichnet, dass** sich die dünne Schicht durchgehend über den Umfang der Spitze erstreckt und die Substanz in der Kapsel etwa kreisförmig berieselt.

14. Vorrichtung gemäß Anspruch 12, **dadurch gekennzeichnet, dass** sich mehrere unterbrochene Wasserschichten gut verteilt über den Umfang der Spitze erstrecken.

15. Vorrichtung gemäß Anspruch 12, **dadurch gekennzeichnet, dass** die dünne Wasserschicht weniger oder gleich 0,5 mm dick ist.

16. Vorrichtung gemäß Anspruch 11, **dadurch gekennzeichnet, dass** die Spitze (5, 582) derart ausgeführt ist, dass sie sich durch den Wasserdruck beim Auftreffen auf ein elastisches Element (59) derart öffnet, dass sie einen Kanal von druckabhängig festgelegter Dicke freigibt und somit die Wasserschicht erzeugt.

17. Vorrichtung gemäß Anspruch 11, **dadurch gekennzeichnet, dass** das Einspritzsystem (2B) ein erstes Einspritz- und Perforationselement (51) in Form einer exzentrischen Einspritzspitze, welche einstückig mit der Betätigungseinrichtung (6B) ausgebildet ist, und ein zweites Einspritz- und Perforationselement (50) in Form einer Platte mit mehreren Spitzen aufweist, welche durch eine Kippsteuereinrichtung (8) mit der Betätigungseinrichtung verbunden ist und in relativer Verschiebung in Bezug auf den Kopfsockel angebracht ist; wobei die Platte mit mehreren Spitzen (50) somit in eine Perforationsstellung der Kapseloberfläche gebracht wird, wenn die Erfassungseinrichtung (60) der Betätigungseinrichtung (6B) auf eine zugehörige Kante (360b) der Kapsel trifft und in diese eingreift, und in die Rückzugsstellung in Bezug auf die Kapseloberfläche gebracht wird, und folglich den Eintritt der Einspritzspitze (51) in die Kapsel ermöglicht, wenn die Erfassungseinrichtung nicht auf die zugehörige Kante (360a) der Kapsel trifft.

18. Vorrichtung gemäß Anspruch 17, **dadurch gekennzeichnet, dass** sie einen Kopfsockel (7B) aufweist, der eine Vertiefungseinheit zur Führung der Platte mit mehreren Spitzen (50) bildet und Dichtigkeitsleisten (74) besitzt, welche sich über einem Kapselhalter (40) schließen, um die Kapsel aufzunehmen; wobei die Einspritzspitze mit dieser Einheit in Verbindung steht, um das Wasser in der Vertiefungseinheit und durch die oder etwa auf Höhe der Platte mit mehreren Spitzen (50) zu verteilen.

19. Vorrichtung gemäß einem der vorhergehenden Ansprüche, **dadurch gekennzeichnet, dass** die Einspritztemperatur oder auch der Einspritzleistung in der Kapsel veränderbar sind.

20. Verfahren zur Zubereitung eines Getränks durch Wassereinspritzung durch eine Kapsel hindurch, welche eine Substanz zum Auflösen und/oder Extrahieren enthält, in die die Flüssigkeit durch die Kapsel nach mindestens zwei unterschiedlichen Einspritzarten eingespritzt wird, wobei diese jeweils entsprechend der Kapselart und/oder der Beschaffenheit der in der Kapsel enthaltenen Substanz ausgewählt werden können, wobei die Flüssigkeit nach mindestens zwei Arten eingespritzt wird, in welchen die Anzahl der Einspritzstellen unterschiedlich ist, **dadurch gekennzeichnet, dass** die Flüssigkeit gemäß zwei Einspritzarten eingespritzt wird, die zwei unterschiedliche Einspritzhöhen in der Kapsel festlegen.

21. Verfahren gemäß Anspruch 20, **dadurch gekennzeichnet, dass** die Flüssigkeit nach einer ersten Art derart eingespritzt wird, dass sie in der Kapsel eine Wirbelbewegung der eingespritzten Flüssigkeit erzeugt, die für eine Vermischung mit der Substanz sorgt.

22. Verfahren gemäß Anspruch 21, **dadurch gekennzeichnet, dass** die Flüssigkeit nach einer zweiten Art derart eingespritzt wird, dass sie eine Berieselung durch mehrere Eintrittsstellen in der Kapsel und mit einer geringeren Einspritzgeschwindigkeit als nach der ersten Art bildet.

23. Verfahren zur Zubereitung eines Getränks durch Wassereinspritzung durch eine Kapsel hindurch, welche eine Substanz zum Auflösen und/oder zum Extrahieren enthält, in die die Flüssigkeit durch die Kapsel hindurch nach mindestens zwei verschiedenen Einspritzarten eingespritzt wird, wobei diese jeweils entsprechend der Kapselart und/oder der Beschaffenheit der in der Kapsel enthaltenen Substanz ausgewählt werden können, **dadurch gekennzeichnet, dass** die Flüssigkeit gemäß mindestens zwei Einspritzarten eingespritzt wird, bei welchen die Einführgeschwindigkeit der Flüssigkeit in die Kapsel unterschiedlich ist,
wobei die Flüssigkeit nach einer ersten Art derart eingespritzt wird, dass sie in der Kapsel eine Wirbelbewegung der eingespritzten Flüssigkeit erzeugt, die für eine Vermischung mit der Substanz sorgt, und
wobei die Flüssigkeit nach einer zweiten Art derart eingespritzt wird, dass sie eine Berieselung durch mehrere Eintrittsstellen in der Kapsel und mit einer geringeren Einspritzgeschwindigkeit als nach der ersten Art bildet.

24. Verfahren gemäß einem der Ansprüche 20 bis 23, **dadurch gekennzeichnet, dass** die geeignete Einspritzart automatisch durch Erkennung der Größe und/oder der jeweiligen Form der Kapsel ausgewählt wird.

25. Verfahren gemäß Anspruch 24, **dadurch gekennzeichnet, dass** die Wahl der Einspritzart nach zwei Stellungen erfolgt, je nachdem, ob die Kapseln eine Eingriffskante aufweisen oder nicht.

## Claims

1. Device for preparing a drink by injection of water through a capsule (3, 3A, 3B) containing a substance to be dissolved and/or to be extracted,
comprising at least one water injection system (2) designed to inject water into the capsule (3),
the injection system (2, 2B, 2C) being able to be switched in order to be selected according to at least two different methods for wetting the substance so as to adapt the wetting depending on the type of capsule and/or on the nature of the substance contained in the capsule, **characterized in that** the injection system comprises at least one perforation and injection element (5, 50, 51, 500) that can be moved in the capsule into at least two distinct positions with reference to the perforated surface of the capsule.

2. Device according to Claim 1, **characterized in that** the perforation element (5, 50, 51, 500) can be moved to two different depths in the capsule.

3. Device according to Claim 2, **characterized in that** the perforation element (5) can be moved into a first high position (P₁) in the capsule in order to wet the substance contained in the capsule from the top and a second low position (P₂) in the capsule in order to wet the substance contained in the capsule from the bottom.

4. Device according to Claim 3, **characterized in that** the perforation element (500) can be moved into a first high position in the capsule in which at least one injection point (513) is uncovered in the capsule and a second lower position in the capsule in which a larger number of injection points (515) are uncovered in the capsule.

5. Device for preparing a drink by injection of water through a capsule (3, 3A, 3B) containing a substance to be dissolved and/or to be extracted, comprising at least one water injection system (2) designed to inject water into the capsule (3),
the injection system (2, 2B, 2C) being able to be switched in order to be selected according to at least two different methods of wetting the substance in order to adapt the wetting depending on the type of capsule and/or the nature of the substance contained in the capsule; the injection system comprising at least one first perforation and injection element (50) and at least one second perforation and injection element (51) distinct from the first perforation and injection element; which elements can be moved relative to one another; each of them providing a different wetting method for wetting the substance in the capsule, **characterized in that** the first and second elements (50, 51) can be moved in phase opposition relative to one another into at least one first position in which the first element is in engagement in the capsule and the second element is retracted from the capsule and conversely a second position in which the first element is retracted from the capsule and the second element is in engagement in the capsule.

6. Device according to Claim 5, **characterized in that** the second injection element is a multi-point plate (50) designed, when it is engaged in the capsule, to perforate the surface of the capsule in multiple locations.

7. Device according to Claim 5, **characterized in that** the second element is an injection point located substantially in the centre of the capsule and configured so as to produce a multidirectional divergent spraying in the form of at least one fine layer of water.

8. Device according to Claim 5 or 6, **characterized in that** the first element (51) comprises at least one injection point inside the capsule in the form of a jet (J) configured so as to create, in the capsule, a swirling movement which causes a mixing of the liquid with the substance.

9. Device according to any one of the preceding claims, **characterized in that** an actuation means (6, 6B) is provided in order to move at least the said perforation and injection element into the two positions selectively by recognition of the specific size and/or geometry of the capsule.

10. Device according to Claim 9, **characterized in that** the actuation means comprises at least one support (6, 6B) secured to the said perforation and injection element; which support can be moved elastically relative to a head base, the actuation means comprising at least one detection means (60) designed to drive the actuation means in movement relative to the head base by engagement of an edge of the capsule in a complementary manner.

11. Device according to Claim 10, **characterized in that** the injection system (2) comprises a single central injection point which is secured to the actuation means (6) so as to be positioned in a low position (P₂) in the capsule when the detection means encounters no complementary edge (36) of the capsule and a high position (P₁) in the capsule when the detection means encounters and engages a complementary edge of the capsule.

12. Device according to Claim 11, **characterized in that** the central injection point (5) is configured so as to produce a multidirectional divergent spraying in the form of at least one fine layer of water.

13. Device according to Claim 12, **characterized in that** the fine layer extends continuously over the periphery of the point and sprays the substance in the capsule in a substantially circular manner.

14. Device according to Claim 12, **characterized in that** several discontinuous layers of water extend in a manner substantially distributed over the periphery of the point.

15. Device according to Claim 12, **characterized in that** the fine layer of water has a thickness that is less than or equal to 0.5 mm.

16. Device according to Claim 11, **characterized in that** the point (5, 582) is configured so as to be opened by the pressure of water against an elastic element (59) so as to release a passageway of determined thickness depending on the pressure and thus create the said layer of water.

17. Device according to Claim 11, **characterized in that** the injection system (2B) comprises a first injection and perforation element (51) in the form of an off-centre injection point which is secured to the actuation means (6B) and a second injection and perforation element (50) in the form of a multi-point plate which is connected by a lever control means (8) to the actuation means and is mounted so as to be able to move relative to the head base; the said multi-point plate (50) thus being controlled into a position for perforating the surface of the capsule when the detection means (60) of the actuation means (6B) encounters and engages a complementary edge (360b) of the capsule and is controlled into a retraction position relative to the surface of the capsule and consequently allowing the injection point (51) to enter the capsule when the detection means does not encounter the complementary edge (360a) of the capsule.

18. Device according to Claim 17, **characterized in that** it comprises a head base (7B) that forms a hollow assembly for guiding the multi-point plate (50) and has sealing rims (74) closing over a capsule holder (40) in order to receive the capsule; the injection point being in communication with the said assembly in order to deliver the water into the hollow assembly and through or substantially at the level of the multi-point plate (50).

19. Device according to any one of the preceding claims, **characterized in that** the temperature of injection or else the flow rate of injection into the capsule are switchable.

20. Method for preparing a drink by injecting water through a capsule containing a substance to be dissolved and/or to be extracted, in which the liquid is injected through the capsule according to at least two different injection methods, each being able to be selected depending on the type of capsule and/or on the nature of the substance contained in the said capsule, the liquid being injected according to at least two methods in which the injection points are distinct in number, **characterized in that** the liquid is injected according to two injection methods which define two distinct injection depths in the capsule.

21. Method according to Claim 20, **characterized in that** the liquid is injected according to a first method in such a manner as to create, in the said capsule, a swirling movement of the injected liquid causing a mixing with the said substance.

22. Method according to Claim 21, **characterized in that** the liquid is injected according to a second method in such a manner as to form a spraying at several points of entry into the capsule and at an injection speed that is slower than according to the first method.

23. Method for preparing a drink by injecting water through a capsule containing a substance to be dissolved and/or to be extracted, in which the liquid is injected through the capsule according to at least two different injection methods, each being able to be selected depending on the type of capsule and/or on the nature of the substance contained in the said capsule, **characterized in that** the liquid is injected according to at least two injection methods in which the speed of injection of the liquid into the capsule is different,
the liquid being injected according to a first method in such a manner as to create, in the said capsule, a swirling movement of the injected liquid causing a mixing with the said substance, and
the liquid being injected according to a second method in such a manner as to form a spraying at several points of entry into the capsule and at an injection speed that is slower than according to the first method.

24. Method according to any one of Claims 20 to 23, **characterized in that** the appropriate injection method is selected automatically by recognition of the particular size and/or shape of the capsule.

25. Method according to Claim 24, **characterized in that** the selection of the injection method is made according to two positions depending on whether the capsules have an engagement edge or not.
